(19) Europäisches Patentamt
European Patent Office
Office européen des brevets

(11) **EP 2 351 798 A1**

(12) **EUROPEAN PATENT APPLICATION**
published in accordance with Art. 153(4) EPC

(43) Date of publication:
**03.08.2011 Bulletin 2011/31**

(51) Int Cl.:
*C09C 1/56* [(2006.01)]     *C09C 1/48* [(2006.01)]

(21) Application number: **09816283.7**

(22) Date of filing: **29.09.2009**

(86) International application number:
**PCT/JP2009/066941**

(87) International publication number:
**WO 2010/035871 (01.04.2010 Gazette 2010/13)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.09.2008 JP 2008251559**

(71) Applicant: **Lion Corporation
Tokyo 130-8644 (JP)**

(72) Inventors:
• **INOMATA Kazuya
Tokyo 130-8644 (JP)**

• **UNAGAMI Runa
Tokyo 130-8644 (JP)**
• **ADACHI Toko
Tokyo 130-8644 (JP)**
• **ITO Atsushi
Tokyo 130-8644 (JP)**

(74) Representative: **Hart-Davis, Jason et al
Cabinet Beau de Loménie
158, rue de l'Université
75340 Paris Cedex 07 (FR)**

(54) **METHOD FOR PRODUCING HIGH-PURITY CARBON BLACK**

(57)     The invention provides a method for producing a purified carbon black by removing metal from the aqueous dispersion of carbon black, wherein the metal is removed by bringing the aqueous dispersion of carbon black into contact with at least one organic acid selected from the group consisting of glycolic acid, ascorbic acid and malonic acid. The invention can provide a method for producing the purified carbon black where the metal components such as iron and the other metals contained as the impurities in carbon black can be reduced.

**Description**

**[Technical Field]**

The present invention relates to a method for producing a purified carbon black by removing metal components such as iron and the other metals which may be contained as impurities in the carbon black.

**[Background Art]**

Carbon black is widely used, for example, in the field of rubber applications, especially as a reinforcing filler in rubber products; applications of a black pigment for resins, printing inks, paintings and the other colour materials; and applications of an electroconductive filler for resins and the other insulators.

The methods for producing carbon black include (1) the furnace process to partially combust a raw material; (2) the contact process where flame from the burner tip as a result of combustion is brought into contact with channel steel and the resultant carbon black is collected; (3) the thermal process where natural gas is thermally decomposed. The furnace process is the most common method. In the furnace process, creosote oil or petroleum heavy oil, which is generally used as the raw material is blown into a reaction furnace together with air in such an amount that is theoretically insufficient for complete combustion to cause incomplete combustion, followed by water cooling and finally trapping into water to obtain carbon black in the form of an aqueous dispersion.

The metal elements such as iron, nickel, vanadium and the other metals are contained in the raw materials for carbon black, which metal elements are condensed in the manufacturing process of carbon black. In addition to the above, contamination with metal components resulting from the cooling water and the metallic surface of manufacturing apparatus will produce carbon black containing various kinds of metal components. It is required to remove as much metal components as possible from the carbon black to have a high purity for the applications of batteries, semiconductors and the other electronic devices because the metal components retard those applications.

To reduce the metal contents in the carbon black, the following methods are proposed: the method where the aqueous dispersion of carbon black is brought into contact with a variety of chelating agents, thereby eluting the metal components from the carbon black, and at the same time, allowing the metal components to be trapped by the chelating agent and transferred to a liquid phase, and finally solid-liquid separation is carried out (JP 2005-113091 A); the method for separation by vigorously stirring the aqueous dispersion of carbon black and then separating the carbon black by filtration (JP 2005-220320 A); and the method of washing carbon black with an aqueous solution of inorganic acid to elute the metal components (JP 58-222157 A).

**[Summary of Invention]**

**[technical Problem]**

An object of the present invention is to provide a method for producing a purified carbon black having a reduced amount of metal components including iron and the other metals which are supposed to be contained as impurities in the carbon black.

**[solution to Problem]**

As a result of the intensive studies, the inventors of the invention found that the above-mentioned object can be achieved by using a particular organic acid. Namely, the present invention provides a method for producing a purified carbon black by removing from the aqueous dispersion of carbon black, comprising the step of:

> bringing a carbon black having an iron content of 100 ppm or less into contact with at least one organic acid selected from the group consisting of glycolic acid, ascorbic acid and malonic acid in an aqueous dispersion medium to remove iron from the carbon black.

**[Advantageous Effects of Invention]**

The kind and amount of impurities to be contained in carbon black vary depending on the production process and the used raw material. For example, ketjen black produced with the gas furnace process, i.e., a typical furnace process generally used for producing carbon black contains about 15 to 60 ppm of iron. The iron content mentioned above can be reduced to about 2 to 10 ppm by the method of the invention. In particular, when malonic acid is used, it is possible to produce a purified carbon black with a higher purity because the residual amount of organic substance derived from the organic acid becomes small in the carbon black after purification. According to the method of the invention, carbon black with high purity can be obtained in high yield. The purified carbon black obtainable by the method of the invention is especially suitable for the application of a material for electrodes such as positive and negative electrodes of secondary batteries because of a reduced metal content in the purified carbon black.

**[Description of Embodiments]**

Generally, carbon black is an aggregate of finely divided spherical particles obtainable by subjecting natural gas, acetylene, acetyl, aromatic hydrocarbon oil and the other carbon sauce to thermal decomposition process or incomplete combustion process . The production method of carbon black includes the furnace process, channel process, thermal process and the like. A trace amount of metal is usually contained as the impurities in carbon black. Principally, iron, nickel and vanadium are contained in carbon black although the kind and the amount of metal to be contained vary depending on the kind of raw material and the production process.

The invention can apply to various kinds of conventional carbon blacks having an iron content of 100 ppm or less, for example, furnace black commonly available.

According to the method of the invention, the iron content can be further reduced when a carbon black having an iron content of 100 ppm or less, particularly 50 ppm or less, more particularly 30 ppm or less, and even when a carbon black with a high purity where the iron content is reduced to 20 ppm or less is used as the starting material. The carbon black with a reduced iron content, which is used as a starting material for the production method of the invention can be obtained, for example, by using a stock oil with a low metal content, or subjecting a carbon black with a high iron content to washing, for example, with water or an aqueous solution of chelating agent or acid, based on any conventional method. According to the invention, the iron content can be decreased to 10 ppm or less, preferably 7 ppm or less, and more preferably 5 ppm or less. A carbon black with an iron content of more than 10 ppm is preferably used as the starting material to satisfactorily obtain the effect of the invention.

The carbon black which is not yet dried to particles, for example, in the form of an aqueous dispersion can also be used. The iron content herein used is expressed as the amount relative to the solid content (dry solids content) of the aqueous dispersion of carbon black. When the starting material is in the form of an aqueous dispersion, the aqueous dispersion of carbon black is filtered and the residue is dried until the water content reaches about 2% to determine the iron content. In this case, drying can be achieved by allowing the residue to stand for about 24 hours at 100 to 150°C and atmospheric pressure.

As the commercially available carbon black, Ketjen Black EC300J, Ketjen Black EC600JD and the like, made by Ketjen Black International Com can be used.

According to the invention, for the purpose of removing the metal components from the carbon black, the carbon black is brought into contact with an organic acid in an aqueous dispersion medium to move the metal components contained in the carbon black into the aqueous solvent. The carbon black is thus in a dispersed state in the aqueous dispersion medium according to the invention. The aqueous dispersion medium herein used indicates water where a water-soluble organic solvent may be contained. Desirably, the carbon black may be dispersed in the dispersion medium in the form of primary particles. However, the carbon black may not be dispersed in the form of completely separate particles, but may be present in the form of secondary particles to some extent. The particle size of carbon black may be small enough to exhibit the metal content reducing effect according to the invention.

To prevent the contamination by impurities, the use of deionized water, ultra pure water, distilled water or ultra-filtered water is preferable as the water used to prepare the aqueous dispersion medium.

Specific examples of the water-soluble organic solvent that can be contained in the aqueous dispersion medium include alkyl alcohols such as methyl alcohol, ethyl alcohol, n-propyl alcohol, isopropyl alcohol, n-butyl alcohol, sec-butyl alcohol, tert-butyl alcohol, isobutyl alcohol and the like; ketones such as acetone, methyl ethyl ketone and the like; dialkyl ethers such as ethylene glycol methyl (or ethyl) ether, diethylene glycol ethyl (or butyl) ether, diethylene glycol allyl ether, diethylene glycol diethyl ether, triethylene glycol diethyl ether and the like; and esters such as methyl acetate, ethyl acetate, butyl acetate and the like. Of those solvents, the alcohol solvents are preferable because evaporation and separation can be minimized when mixed with water to prepare a mixed dispersion medium, thereby producing a stable the aqueous dispersion of carbon black; and the wettability of the surface of carbon black can be improved, thereby making the preparation of the aqueous dispersion easier. In particular, lower alcohols having 1 to 4 carbon atoms are preferred. The above-mentioned water-soluble organic solvent may be preferably added in an amount of 10 mass% or less, more preferably 5 mass% or less, with respect to the amount of water. When consideration is given to the improvement of wettability of the surface of carbon black, a surfactant may be further added to water. Examples of the surfactant include anionic surfactants such as fatty acid salts, alkyl sulfate ester salts, alkyl aryl sulfonate salts, alkyl naphthalene sulfonate salts, dialkyl sulfonate salts, dialkyl sulfosuccinate salts, alkyl diaryl ether disulfonate salts, alkyl phosphate salts, polyoxyethylene alkyl aryl ether sulfonate salts, polyoxyethylene alkyl phosphate ester salts, glycerol borate fatty acid esters, polyoxyethylene glycerol fatty acid esters and the like; nonionic surfactants such as polyoxyethylene alkyl ethers, polyoxyethylene alkyl aryl ethers, polyoxyethylene derivatives, polyoxyethylene oxypropylene block copolymers, sorbitan fatty acid esters, polyoxyethytene sorbitan fatty acid esters, polyoxyethylene sorbitol fatty acid esters, glycerol fatty acid esters, polyoxyethylene fatty acid esters, acetylene diols, polyoxyethylene alkylamines, polyoxyethylene alkylphenyl ether-modified silicones and the like; cationic surfactants such as aliphatic amine salts, quaternary ammonium salts, sulfonium salts, phophonium salts and the like: and amphoteric surfactants such as amino acid compounds, betaine compounds and the like. The amount of the above-mentioned surfactant is preferably 5 mass% or less, and more preferably 1 mass% or less, based on the mass of water.

The aqueous dispersion of carbon black may preferably contain 0.5 to 30 mass% of carbon black on the basis of solid content. When the content of carbon black in the aqueous dispersion is less than 0.5 mass%, the increase of throughput may lower the productivity. On the other hand, when the content of carbon black is more than 30 mass%, the aqueous dispersion becomes so viscous that stirring may not be carried out easily, which may lower the purification efficiency. The viscosity of the aqueous dispersion of carbon black, which varies depending on the kind of carbon black and the properties including oil absorption may be appropriately chosen according to the intended purpose in consideration of the balance of productivity and purification efficiency. Furnace black, in particular, ketjen black or the like has a higher oil absorption and a larger specific surface area, which tends to show an increased viscosity. Therefore, the content of the carbon black in the aqueous dispersion is preferably 10 mass% or less, and more preferably 5 mass% or less, from the viewpoint of purification efficiency.

The aqueous dispersion of carbon black can be obtained by adding a predetermined amount of carbon black to an aqueous dispersion medium little by little with stirring. In the furnace process, it is possible to directly use the aqueous dispersion of carbon black obtainable when carbon black produced as a result of incomplete combustion is cooled with water and collected.

For she dispersion, the stirring may be desirably carried out to such an extent that the agglomerates of carbon black can be broken into primary particles. To do this, the above-mentioned aqueous dispersion is preferably mixed using a general-purpose dispersion mixer or homogenizer. To be more specific, the stirring may be carried out using a disperser, high speed disperser, homogenizer, ultrasonic homogenizer, bead mill, colloid mill, jet mill, slasher mill, ball mill, sand mill, ultrafine mill, Eiger Motor Mill, Dyno-mill, pearl mill, agitator mill, Cobol Mill, three-roll mill, two-roll mill and the like. In particular, it is preferable to use the stirring apparatus such as a disperser, homogenizer or the like because a large volume of slurry with a relatively low viscosity can be dispersed in a short period of time and continuous production can be achieved.

[Organic acid]

In the invention, at least one organic acid selected from the group consisting of glycolic acid, ascorbic acid and malonic acid can be used. Commercially available reagents of glycolic acid, ascorbic acid and malonic acid can be used. Of those organic acids, glycolic acid and malonic acid are preferred because the residual amount of organic acid in the resultant purified carbon black becomes less, and malonic acid is further preferred because of the extremely little residual amount.

As the organic acid, two or more kinds of acids as shown above may be included. In such a case, the use of malonic acid is recommendable because the residual amount of organic acid in the purified carbon black can be reduced.

The amount of organic acid to be added to the aqueous suspension of carbon black, which may be appropriately determined according to the purpose may be preferably within a range of 1 to 400 mass% relative to the mass of carbon black contained in the aqueous dispersion of carbon black (i.e., dry solids content of carbon black). When the amount of organic acid is less than the above-mentioned lower limit, the effect of the invention, removability of the metal components may not be gained. When the amount of organic acid exceeds the above-mentioned upper limit, the cost effectiveness is unsatisfactory because the effect obtained by the invention does not correspond to the amount of organic acid. In addition, the organic substance derived from the organic acid will substantially remain in the carbon black after purification, which may unfavorably increase the amount of impurities. The organic acid may be added in an amount of 100 mass% or less, preferably 20 mass% or less, and more preferably 10 mass% or less, with respect to the amount of carbon black contained in the aqueous dispersion of carbon black.

As far as the effects of the invention are not impaired, other organic acids such as acetic acid, oxalic acid and the like may be used in combination with the above-mentioned organic acids. In such a case, it is also preferable that at least one organic acid selected from the group consisting of glycolic acid, ascorbic acid and malonic acid be added in an amount of at least 1 mass% or more, more preferably 2 mass% or more, with respect to the mass of carbon black contained in the aqueous dispersion of carbon black.

[Method for producing purified carbon black]

In the invention, carbon black is brought into contact with a particular organic acid as mentioned above in an aqueous dispersion medium. For this purpose, the organic acid may be added to a previously formed the aqueous dispersion of carbon black, followed by mixing and stirring. Alternatively, an aqueous dispersion medium containing the organic acid is mixed with carbon black, followed by stirring. Or carbon black and the organic acid are first mixed together, and then the resultant mixture may be dispersed in an aqueous dispersion medium. Or carbon black and the organic acid may be added to an aqueous dispersion medium, followed by mixing. The purified carbon black thus produced by the invention may be subjected to solid-liquid separation and dried. The operations of stirring and mixing, solid-liquid separation, and drying may be carried out in conventionally known methods.

As for the stirring and mixing operation, for example, a predetermined amount of Organic is mixed into the aqueous dispersion of carbon black and then the mixture is stirred in a general-purpose stirrer equipped with an agitating element, such as a homomixer, paddle agitator, turbine impeller mixer or the like, usually for a period of about 10 to 100 minutes, preferably 15 to 50 minutes. During the stirring and mixing operation the temperature of the aqueous dispersion of carbon black (that is, the temperature where carbon black comes in contact with the acid) is not particularly limited, but may be arbitrary so long as the temperature is suitable for stirring and mixing. The aqueous dispersion may be heated or not if only the stirring and mixing can be completed. It is possible to obtain the sufficient effect af eliminating the metal components, usually around at room temperature, more specifically 10 to 50°C, preferably 20 to 30°C.

To separate the purified carbon black from the aqueous dispersion of carbon black, centrifugal separation, filtration, addition of the aqueous dispersion into a non-aqueous organic solvent or the like can be used. Alternatively, a flocculant may be mixed into the above-mentioned aqueous dispersion to form a floc of carbon black, which may be filtered. Examples of the above-mentioned non-aqueous organic solvent include toluene, xylene, benzene, chloroform, hexane, heptane and the other hydrophobic solvents. As the flocculant, there are synthetic polymer flocculants and inorganic flocculants. Specifically, polyacrylamide, acrylamide - sodium acrylate copolymer, alkylamino methacrylate quaternary salt polymer, alkylamino acrylate quaternary salt - acrylamide copolymer, aluminum sulfate, poly aluminum chloride and the like may be used alone or in combination. From the viewpoint of safety, centrifugal separation or filtration is preferred.

The purified carbon black can be obtained by heating and drying the carbon black separated by the above-mentioned process. For the electroconductive applications such as batteries and semiconductors, the heating and drying process may preferably be adoped in a stream of an inert gas. Although the drying temperature varies depending upon the kind of carbon black and other factors, the heat drying can be achieved at 100 to 150°C. In the course of drying, it is desirable that the metallic surface of the drying apparatus be out of contact with the carbon black in order to prevent recontamination by metals. More specifically, a baking furnace made of ceramics may be used. The completion of drying operation can be recognized by using an infrared moisture balance (FD-600-2, made by Kett Electric Laboratory) to confirm that the mass of a weighed sample (0.1 g) placed on an aluminum plate and heated at 110°C for 30 minutes is changed to 0.1% or less of the initial mass.

The carbon black purified by the invention is applicable to the material for electrodes of various batteries. For example, when used for the positive electrode of lithium-ion rechargeable batteries, the purified carbon black may be mixed together with a positive electrode active material and a binder agent and dispersed in a proper solvent, and the resultant dispersion may be coated on a current collector metal sheet and dried, followed by pressing. The purified carbon black obtainable by the production method of the invention has a reduced metal content, so that a risk of ignition in the secondary batteries can be reduced.

**[Examples]**

The solvent, carbon black products, hydrochloric acid for ICP analysis and organic acids used in Examples and Comparative Examples are shown below.

[Table 1]

| Item | Compound Name | Trade Name | Manufacturer |
|------|---------------|------------|--------------|
| Solvent | Pure water | | |
| Carbon black | Carbon black | Ketjen Black EC300J | Ketjen Black International Com |
| | Carbon black | Ketjen Black EC600JD | Ketjen Black International Com |
| For ICP Analysis | Hydrochloric acid | for atomic absorption analysis | Kanto Chemical Co., Inc. |

(continued)

| Item | Compound Name | Trade Name | Manufacturer |
|---|---|---|---|
| Organic Acids | Glycolic acid | Glycolic acid | Junsei Chemical Co., Ltd. |
| | Lactic acid | Lactic acid | Junsei Chemical Co,. Ltd. |
| | Malic acid | Malic acid | Junsei Chemical Co,. Ltd. |
| | Gluconic acid | Gluconic acid | Junsei Chemical Co., Ltd. |
| | Citric acid | Citric acid | Junsei Chemical Co., Ltd.. |
| | Malonic acid | Malonic acid | Junsei Chemical Co., Ltd.. |
| | Acetic acid | Acetic acid | Junsei Chemical Co., Ltd. |
| | Propionic acid | Propionic acid | Junsei Chemical Co., Ltd. |
| | Oxalic acid | Oxalic acid | Junsei Chemical Co., Ltd. |

(2) Evaluation methods

(2.1) Measurement of metal content: Inductivity Coupled Plasma method

A dilute hydrochloric acid aqueous solution (hereinafter referred to as dilute hydrochloric acid A) was prepared by mixing 10 ml of hydrochloric acid for atomic absorption analysis made by Kanto Chemical Co., Inc. with 190 mL of pure water; and a dilute hydrochloric acid aqueous solution (hereinafter referred to as dilute hydrochloric acid B) was prepared by mixing 20 ml of the same hydrochloric acid as mentioned above with 180 mL of pure water. Subsequently, 200 ml of the dilute hydrochloric acid A and 10 g of carbon black were placed into a 500-ml screw cap bottle, and stirred at 150 rpm for 1.5 hours using a desk-top shaker. Then, the mixture was subjected to solid-liquid separation by filtration under reduced pressure using a membrane filter (1 $\mu$m). The carbon black remaining on the filter was washed with 30 ml of pure water. The resultant filtrate was transferred to a 500-mL beaker and heated to 300°C for 1.5 hours until the filtrate was evaporated to about 10 ml. The remaining filtrate was transferred to a 25-ml volumetric flask and diluted with the dilute hydrochloric acid solution B, which was subjected to plasma atomic emission spectroscopy (ICP). The apparatus for ICP analysis was Optima 5300 DV (made by PerkinElmer Japan Co., Ltd.

In the carbon black used as the starting material, the iron content was 15 ppm (in Ketjen Black EC300J) and 45 ppm (in (Ketjen Black EC600JD); and the content of nickel, vanadium, copper or chromium was less than limit of detection.

(2.2) Determination of yield of purified carbon black

$$[\text{Purified carbon black (g) / Initially charged carbon black (g)}] \times 100$$

(2.3) Determination of residual ratio of organic acid in purified carbon black: Measurement of TG-DTA

The residual amount of organic acid in the purified carbon black was determined by the method of differential thermobalance (TG-DTA) using an analyzer (TG/DTA6200 made by SII NanoTechnology Inc.). As the purified carbon black is heated (at a heating rate of 10°C/minute) under an ambient atmosphere, the decrease in mass of organic acid is terminated before the temperature reaches 300°C. (In this case, a decrease in mass of organic acid observed until the temperature reaches 100°C is considered to result from evaporation of water content. By taking the advantage of the above-mentioned phenomenon, the amount of organic acid remaining in the purified carbon black as a result of the treatment by organic acid was determined according to the following formula, provided that the drying and heating conditions and the amount of sample were made identical.

(A decrease in mass of carbon black treated with organic acid as the temperature is raised from 110 to 300°C) x 100 / (Mass of organic acid-treated carbon black at 300°C)

In the measurement, a blank (aluminum oxide powder: made by Junsei Chemical Co., Ltd.) and a sample for measurement were separately dried at 100°C for three hours under an ambient atmosphere and then about 10 mg was weighed out, which was placed on an aluminum pan for measurement and heated from 30 to 100°C at a heating rate of 10°C/minute.

**Examples 1 to 3**

After a 1-L beaker was charged with 940 g of pure water (23°C), 10 g of an organic acid was gradually added to the pure water with stirring at 350 rpm using a homomixer. After completion of the addition of the total amount of organic acid, 50 g (on a dry basis) of carbon black (Ketjen Black EC300J) was added and the resultant mixture was stirred at 1000 rpm using the homomixer for 30 minutes with the temperature maintained. The aqueous dispersion of carbon black thus obtained was subjected to solid-liquid separation by filtration under reduced pressure using a filter paper (No. 5C). Pure water (1000 g) was added to the residue of wet carbon black remaining on the filter paper, and again stirred at 350 rpm for 30 minutes using the homomixer and the solid-liquid separation was carried out by filtration under reduced pressure. The resultant carbon black was dried at 150°C for 24 hours, so that a high-purity carbon black powder was obtained.

**Comparative Example 1**

After a 1-L beaker was charged with 950 g of pure water (23°C), 50 g of carbon black (Ketjen Black EC300J) was gradually added to the pure water with stirring at 1000 rpm using a homomixer at room temperature. Then, following the same subsequent procedures as in Examples 1 to 3, carbon black powders were obtained.

**Comparative Examples 2 to 5**

Carbon black powders were obtained in the same manner as in Examples 1 to 3 using a variety of organic acids.

**Examples 4 to 9**

After a 1-L beaker was charged with 945 to 947 g of pure water (23°C), 3 to 5 g of an organic acid was gradually added to the pure water at room temperature with stirring at 350 rpm using a homomixer. The total mass of the mixture was thus made 950 g, and 50 g (on a dry basis) of carbon black (Ketjen Black EC300J) was added. Then, following the same subsequent procedures as in Examples 1 to 3, carbon black powders were obtained.

**Comparative Examples 6 and 7**

After a 1-L beaker was charged with 945 g of pure water (23°C), 5 g of citric acid or EDTA·2Na was gradually added to the pure water with stirring at 350 rpm using a homomixer. Then, following the same subsequent procedures as in Examples 1 to 3, carbon black powders were obtained.

The results are shown in the following Tables 2 to 4.

[Table 2]

| | Ex. 1 | Ex. 2 | Ex. 3 | Comp. Ex. 1 |
|---|---|---|---|---|
| Organic acid | Glycolic acid | Ascorbic acid | Malonic acid | - |
| Added amount xt%lo/carbon black) | 20 | 20 | 20 | 0 |
| Fe content (ppm) | 4.0 | 3.0 | 3.5 | 15 |
| Yield (%) | >95 | >95 | >95 | 100 |
| Residual ratio (%) | 1.6 | 2.8 | 0.4 | 0 |

[Table 3]

| | Comp. Ex. 2 | Comp. Ex. 3 | Comp. Ex. 4 | Comp. Ex. 5 | Comp. Ex. 6 | Comp. Ex. 7 |
|---|---|---|---|---|---|---|
| Organic acid | Citric acid | Acetic acid | Propionic acid | Oxalic acid | Citric acid | EDTA· 2Na |
| Added amount (wt%/ carbon black) | 20 | 20 | 20 | 20 | 10 | 10 |
| Fe content (ppm) | 12 | 12 | 15 | 14 | 13 | 9.0 |
| Yield (%) | >95 | >95 | >95 | >95 | >95 | >95 |
| Residual ratio (%) | 2.5 | 0.2 | 0.3 | 0.1 | 2.0 | 2.2 |

[Table 4]

| | Ex.4 | Ex.5 | Ex. 6 | Ex.7 | Ex. 8 | Ex. 9 |
|---|---|---|---|---|---|---|
| Organic acid | Glycolic acid | Glycolic Acid | Malonic acid | Malonic acid | Ascorbic acid | Ascorbic acid |
| Added amount (wt%/carbon black) | 10 | 6 | 10 | 6 | 10 | 6 |
| Fe content (ppm) | 5.6 | 5.7 | 4.0 | 4.5 | 4.3 | 5.2 |
| Yield (%) | >95 | >95 | >95 | >95 | >95 | >95 |
| Residual ratio (%) | 0.9 | 0.3 | 0.1 | 0.1 | 1.2 | 0.9 |

**Example 10**

After a 1-L beaker was charged with 948 g of pure water (23°C)= 2 g of an organic acid was gradually added to the pure water with stirring at 350 rpm using a homomixer. After completion of the addition of the total amount of organic acid, 50 g (on a dry basis) of carbon black (Ketjen Black EC600JD) was added. Then, following the same subsequent procedures as in Examples 1 to 3, a carbon black powder was obtained.

**Example 11**

The carbon black obtained after filtration under reduced pressure in Example 10 was added to an aqueous solution of organic acid newly prepared in the same at in Example 10. Then, the steps of solid-liquid separation, stirring in pure water, filtration under reduced pressure and drying were carried out in the same manner as in Examples 10, so that a carbon black was obtained.

**Example 12**

The carbon black obtained after the second filtration under reduced pressure in Example 11 was added to an aqueous solution of organic acid newly prepared in the same manner as in Example 10. Then, the steps of solid-liquid separation, stirring in pure water, filtration under reduced pressure and drying were carried out in the same manner as in Example 10, so that a carbon black was obtained.

**Comparative Example 8**

After a 1-L beaker was charged with 950 g of pure water (23°C), 50g (on a dry basis) of carbon black (Ketjen Black EC600JD) was added with stirring at 350 rpm using a homomixer. Then, following the same subsequent procedures as in Examples 1 to 3, a carbon black powder was obtained.

The results are shown in the following Table 5.

[Table 5]

|  | Comp. Ex. 8 | Ex.10 | Ex. 11 | Ex. 12 |
| --- | --- | --- | --- | --- |
| Organic acid | - | Malonic acid | Malonic acid | Malonic acid |
| Added amount (wt%/carbon black) | - | 4 | 4 | 4 |
| No. of washings | - | 1 | 2 | 3 |
| Fe content (ppm) | 45 | 25 | 10 | 7 |
| Yield (%) | - | >95 | >95 | >95 |
| Residual ratio (%) | - | 0.4 | 1.3 | 1.2 |

**Example 13**

After a 1-L beaker was charged with 940 g of pure water (23°C), 10 g of an organic acid was gradually added to the pure water with stirring at 350 rpm using a homomixer.. After completion of the addition of the total amount of organic acid, 50 g (on a dry basis) of carbon black (Ketjen Black EC600JD) was added. Then, following the same subsequent procedures as in Examples 1 to 3, a carbon black powder was obtained,

**Comparative Example 10**

A carbon black powder was obtained in the same manner as in Example 13 except that citric acid was used.
The results are shown in the following Table 6.

[Table 6]

|  | Ex. 13 | Comp. Ex. 10 |
| --- | --- | --- |
| Organic acid | Malonic acid | Citric acid |
| Added amount (wt%/carbon black) | 20 | 20 |
| No. of washings | 1 | 1 |
| Fe content (ppm) | 5 | 27 |
| Yield (%) | >95 | >95 |
| Residual ratio (%) | 0.3 | 1.6 |

**Claims**

1. A method for producing a purified carbon black by removing metal components from the aqueous dispersion of carbon black, comprising the step of:

   bringing a carbon black having an iron content of 100 ppm or less into contact with at least one organic acid selected from the group consisting of glycolic acid, ascorbic acid and malonic acid in an aqueous dispersion medium to remove iron from the carbon black.

2. The method of producing the purified carbon black of claim 1, wherein the aqueous dispersion of carbon black contains the carbon black in an amount of 0.5 to 30 mass%.

3. The method of producing the purified carbon black of claim 1 or 2, wherein the organic acid comprises at least malonic acid.

4. An electrode of a secondary battery, comprising the purified carbon black produced by any of the methods of claims 1 to 3.

## INTERNATIONAL SEARCH REPORT

| | International application No. |
|---|---|
| | PCT/JP2009/066941 |

**A. CLASSIFICATION OF SUBJECT MATTER**
*C09C1/56*(2006.01)i, *C09C1/48*(2006.01)i

According to International Patent Classification (IPC) or to both national classification and IPC

**B. FIELDS SEARCHED**

Minimum documentation searched (classification system followed by classification symbols)
C09C1/56, C09C1/48

Documentation searched other than minimum documentation to the extent that such documents are included in the fields searched
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2005-113091 A  (Chubu Chelest Co., Ltd.),<br>28 April 2005 (28.04.2005),<br>paragraphs [0013] to [0016]<br>(Family: none) | 1,2<br>4 |
| Y | JP 2000-348537 A  (Lion Corp.),<br>15 December 2000 (15.12.2000),<br>entire text<br>(Family: none) | 4 |
| A | JP 56-76464 A  (Hoechst AG.),<br>24 June 1981 (24.06.1981),<br>claims<br>& US 4320108 A          & EP 31408 A2<br>& DE 2944916 A          & CA 1142325 A<br>& DD 154221 A | 1-4 |

☒ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 01 December, 2009 (01.12.09) | 08 December, 2009 (08.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/066941 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 8-333521 A (Hodogaya Chemical Co., Ltd.), 17 December 1996 (17.12.1996), claims; paragraph [0006] (Family: none) | 1-4 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005113091 A
- JP 2005220320 A
- JP 58222157 A